# EUROPÄISCHE PATENTSCHRIFT

(11) **EP 2 182 255 B1**
(45) Veröffentlichungstag und Bekanntmachung des Hinweises auf die Patenterteilung: **29.02.2012**
(21) Anmeldenummer: 09173270.1
(22) Anmeldetag: 16.10.2009
(51) Int. Cl.: F16J 15/00, F16J 15/32, F01D 11/00

(54) **Bürstenringdichtungsanordnung für eine Turbomaschine und Turbomaschine mit einer Bürstenringdichtungsanordnung**
Brush ring seal assembly for a turbo engine and turbo engine with a brush ring seal assembly
Agencement de joints annulaires à brosses pour une turbomachine et turbomachine dotée d'un agencement de joints à brosses

(30) Priorität: 04.11.2008 DE 102008055736
(43) Veröffentlichungstag der Anmeldung: 05.05.2010
(73) Patentinhaber: Siemens Aktiengesellschaft, 80333 München (DE)
(72) Erfinder: Hofmann, Andreas, 91091, Grossenseebach (DE)

(56) Entgegenhaltungen:
- EP-A1- 1 653 129
- EP-A1- 1 813 840
- EP-A2- 1 180 623
- DE-A1-102004 047 206
- DE-A1-102005 006 939
- JP-A- 2008 064 260
- US-A- 5 106 104
- US-A1- 2001 004 145

## Beschreibung

Die Erfindung betrifft eine Bürstenringdichtung für eine Turbomaschine und eine Turbomaschine mit einer Bürstenringdichtungsanordnung, die eine Mehrzahl an Bürstenringdichtungen aufweist.

Eine Turbomaschine weist statische und rotierende Bauteile auf, die beim Betrieb der Turbomaschine relativ zueinander bewegt sind und gegeneinander an Dichtstellen abgedichtet sind. An den Dichtstellen ist ein Spalt zwischen dem statischen Bauteil und dem rotierenden Bauteil vorgesehen, damit das rotierende Bauteile das statische Bauteil nicht berühren und dadurch beschädigen kann. In dem Spalt ist eine Dichtungseinrichtung vorgesehen, mit der insbesondere beim Betrieb der Turbomaschine die Leckage von Prozessfluid durch den Spalt möglichst gering gehalten werden soll. Als die Dichtungseinrichtung kann beispielsweise ein Labyrinth vorgesehen sein, das eine Mehrzahl von Labyrinthspitzen aufweist. Als Alternative kann eine Bürstendichtung vorgesehen sein, die in dem Spalt eingesetzt ist. Die Bürstendichtung ist von einem bürstenartigen Drahtpaket gebildet, das an dem stationären Bauteil befestigt ist und mit den freien Enden der einzelnen Drähte des Drahtpakets auf die Oberfläche des rotierenden Bauteils aufgesetzt ist. Mit Hilfe des Drahtpakets wird die Dichtwirkung der Bürstendichtung erzeugt, wobei lediglich die Leckage durch das Drahtpaket strömt. Ferner weist die Bürstendichtung einen Stützring auf, gegen den das Drahtpaket aufgrund eines Druckunterschieds über die Bürstendichtung gedrückt wird. Dabei wird das Drahtpaket verdichtet, so dass die Dichtwirkung der Bürstendichtung erhöht ist.

Das statische Bauteil kann beispielsweise ein Gehäuse und das rotierende Bauteil ein Rotor der Turbomaschine sein. Während des Betriebs der Turbomaschine können radiale Bewegungen des Rotors auftreten, die aufgrund der Nachgiebigkeit des Drahtpakets ausgeglichen werden können, so dass das Drahtpaket mit den freien Enden der Drähte direkt an der Oberfläche des Rotors anliegen kann.

Insbesondere findet die Bürstendichtung Anwendung in der Turbomaschine für einen Ausgleichskolben und in dem Beschaufelungspfad. Zum Überwinden von hohen Druckdifferenzen sind mehrere Bürstendichtungen hintereinander axial aufgereiht angeordnet. Herkömmlich kann mit einer einzigen Bürstendichtung eine maximale Druckdifferenz von x bar abgebaut werden, mit hintereinander axial aufgereihten Bürstendichtungen kann herkömmlich eine maximale Druckdifferenz von y bar abgebaut werden. Eine Erhöhung der maximalen Druckdifferenz von y bar bei gleichzeitiger Erhöhung der Anzahl der einzelnen Bürstendichtungen ist nicht möglich, da aufgrund einer ungleichmäßigen axialen Druckverteilung innerhalb der Bürstendichtungsanordnung die maximal mögliche Druckdifferenz von x bar für eine der Bürstendichtungen überschritten werden würde. Insbesondere ist die Bürstendichtung in der Bürstendichtungsanordnung betroffen, die dem hohen Druck ausgesetzt ist, da über sie die maximale Teildruckdifferenz abgebaut wird.

In DE 10 2004 047 206 A1 ist eine Dichtungsanordnung zur Abdichtung von unterschiedlich druckbeaufschlagten Räumen an einem Spalt zwischen einem Rotor und einem Stator beschrieben, wobei die Dichtungsanordnung eine Bürstendichtung aufweist, die über mehrere Borsten verfügt, die an einem Borstenträger fixiert sind, wobei die Bürstendichtung zumindest abschnittsweise in einem Aufnahmeraum angeordnet ist.

Aus US 5 106 104 A ist eine mehrstufige Bürstendichtung bekannt, die eine gesteuerte Verteilung von Druckabfällen über jede Stufe der Dichtung aufweist. Der Druckabfall über jede Stufe ist gesteuert durch eine oder eine Kombination aus strukturellen Veränderungen von Stufe zu Stufe.

EP 1 180 623 A2 offenbart eine Bürstenringdichtungsanordnung für eine Turbomaschine, mit einem Stützring und einem Bürstenringpaket, das von dem Innenrand des Stützrings nach innen vorsteht sowie an dem Innenrand und an einer radial außerhalb des Innenrands angeordneten Abstützstelle an dem Stützring axial abgestützt ist, so dass zwischen dem Innenrand und der Abstützstelle von dem Bürstenringpaket und dem Stützring begrenzt ein ringförmiger Hohlraum gebildet ist, wobei der Stützring eine Druckausgleichsöffnung aufweist, wodurch, wenn an der in die Turbomaschine eingebaute Bürstenringdichtung an der einen Seite der Bürstenringdichtung, der das Bürstenringpaket zugewandt ist, ein erster Druck (PH) und an der anderen Seite der Bürstenringdichtung, an der die Druckausgleichsöffnung angesiedelt ist, ein dritter Druck anliegt (PL), der kleiner als der erste Druck ist, sich in dem Hohlraum ein zweiter Druck einstellt, der zwischen dem ersten Druck und dem dritten Druck (PL) liegt.

Aufgabe der Erfindung ist es eine Bürstenringdichtungsanordnung für eine Turbomaschine, die eine Mehrzahl an Bürstenringdichtung aufweist, zu schaffen, wobei mit der Bürstenringdichtungsanordnung eine hohe Druckdifferenz abbaubar ist.

Die erfindungsgemäße Bürstenringdichtungsanordnung für eine Turbomaschine wird in Anspruch 1 definiert. Sie weist eine Mehrzahl an Bürstenringdichtungen auf, die jeweils einen Stützring und ein Bürstenringpaket aufweisen, das von dem Innenrand des Stürzrings nach innen vorsteht sowie an dem Innenrand und an einer radial außerhalb des Innenrands angeordneten Abstützstelle an dem Stützring axial abgestützt ist, so dass zwischen dem Innenrand und der Abstützstelle von dem Bürstenringpaket und dem Stützring begrenzt ein ringförmiger Hohlraum gebildet ist, wobei der Stützring eine Druckausgleichsöffnung aufweist, wodurch, wenn an der in die Turbomaschine eingebaute Bürstenringdichtung an der einen Seite der Bürstenringdichtung, der das Bürstenringpaket zugewandt ist, ein erster Druck und an der anderen Seite der Bürstenringdichtung, an der die Druckausgleichsoffnung angesiedelt ist, ein dritter Druck anliegt, der kleiner als der erste Druck ist, sich in den Hohlraum ein zweiter Druck einstellt, der zwischen dem ersten Druck und dem dritten Druck liegt. Die Bürstenringdichtungen der Bürstenringsdichtungsan ordnung sind erfindungsgemäß axial hintereinander liegend angeordnet, so dass, wenn an der einen Seite der Bürstenringdichtungsanordnung ein vierter Druck und an der anderen Seite der Bürstenringdichtungsanordnung ein fünfter Druck anliegt, der kleiner als der vierte Druck ist, die Differenz zwischen dem vierten Druck und dem fünften Druck über die Bürstenringdichtungen stufenweise abgebaut wird.

Durch die Druckausgleichsöffnung in dem Stützring prägt sich der dritte Druck via den Hohlraum der Seite der Bürstenringdichtung auf, die dem Bürstenringpaket zugewandt ist. Dadurch ist die Druckdifferenz, die von der Bürstenringdichtung abgebaut wird, reduziert.

Über diejenige Bürstenringdichtung, die dem fünften Druck ausgesetzt ist, wird tendenziell die größte Teildruckdifferenz abgebaut. Dadurch, dass in dem Stützring dieser Bürstenringdichtung die Druckausgleichsöffnung vorgesehen ist, prägt sich der fünfte Druck dem Raum zwischen dieser Bürstenringdichtung und ihrer benachbart angeordneten Bürstenringdichtung auf. Dies setzt sich fort bis zu derjenigen Bürstenringdichtung, die dem vierten Druck ausgesetzt ist, so dass sich der fünfte Druck via die Druckausgleichsöffnungen der einzelnen Bürstenringdichtungen in Richtung zu dem vierten Druck hin aufprägt. Dadurch ist die Teildruckdifferenz, die von derjenigen Bürstenringdichtung unmittelbar abgebaut wird, die dem fünften Druck benachbart angeordnet ist, herabgesetzt und die Teildruckdifferenz, die von derjenigen Bürstenringdichtung abgebaut wird, die dem vierten Druck benachbart angeordnet ist, heraufgesetzt. Somit ist der Druckverlauf von dem fünften Druck zu dem vierten Druck innerhalb der Bürstenringdichtungsanordnung von Bürstenringdichtung zu Bürstenringdichtung vergleichmäßigt. Als Folge hiervon ist es unterbunden, dass diejenige Bürstenringdichtung, die dem fünften Druck benachbart angeordnet ist, die maximal mögliche Druckdifferenz abbaut, wohingegen die restlichen Bürstenringdichtungen der Bürstenringdichtungsanordnung noch Reserven im Druckabbau haben. Somit ist die maximal mögliche Druckdifferenz, die insgesamt von der Bürstenringdichtungsanordnung abbaubar ist, hoch.

Das Bürstenringpaket ist bevorzugt an ihrem radial außenliegenden Rand mit einer umlaufenden Verdickung ausgebildet, mit der das Bürstenringpaket an der Abstützstelle anliegt. Dadurch ist der Hohlraum von der Verdickung begrenzt.

Die Bürstenringdichtung weist bevorzugt einen Deckring auf, der zusammen mit dem Stützring ein C-förmiges Gehäuse der Bürstenringdichtung bildet, so dass das Bürstenringpaket an der Verdickung in dem Gehäuse festgeklemmt ist. Ferner ist die Verdickung bevorzugt von einem Klemmrohr gebildet, das ein am Innenumfang geschlitztes, umlaufendes Rohr ist, in dem der äußere Abschnitt des Bürstenringpakets untergebracht ist, das durch den Schlitz des Klemmrohrs nach innen vorsteht.

Die Druckausgleichsöffnung ist von einer über den Umfang verteilten Mehrzahl an Druckausgleichslöcher gebildet. Dadurch ist eine über den Umfang des Stützrings ausgebildete Verbindung des Hohlraums mit der Seite der Bürstenringdichtung geschaffen, an der der dritte Druck anliegt. Somit stellt sich über den Umfang des Stützrings eine konstante Verteilung des zweiten Drucks in dem Hohlraum ein.

Außerdem ist es bevorzugt, dass zwischen den einzelnen Bürstenringdichtungen jeweils eine Labyrinthspitze vorgesehen ist. Über die Labyrinthspitzen wird eine zusätzliche Druckdifferenz abgebaut, wodurch die maximal mögliche Druckdifferenz, die von der Bürstenringdichtungsanordnung abbaubar ist, erhöht ist.

Erfindungsgemäß sind die Druckausgleichsöffnungen der einzelnen Bürstenringdichtungen derart dimensioniert, dass die Differenz zwischen dem vierten Druck und dem fünften Druck über die Bürstenringdichtungen linear abgebaut wird. Erfindungsgemäß sind die Druckausgleichsöffnungen der einzelnen Bürstenringdichtungen von den über den Umfang verteilten Druckausgleichslöchern gebildet, deren Durchmesser von Bürstenringdichtung zu Bürstenringdichtung derart variiert, dass die Differenz zwischen dem vierten Druck und dem fünften Druck über die Bürstenringdichtungen linear abgebaut wird. Dabei ist eine maximal mögliche Druckdifferenz, die von der Bürstenringdichtungsanordnung abbaubar ist, erzielt. Keine der einzelnen Bürstenringdichtungen als schwächstes Glied kann an ihre maximal zulässige Druckdifferenz stoßen, da alle einzelnen Bürstenringdichtungen gemeinsam beim Betrieb der Turbomaschine gegebenenfalls ihre maximal zulässige Druckdifferenz erreichen. Ferner können gleiche Spaltweiten der einzelnen Stufen erzielt werden, wodurch eine Steigerung der maximalen Druckdifferenz der Bürstenringdichtungsanordnung möglich ist.

Im Folgenden wird eine bevorzugte Ausführungsform der erfindungsgemäßen Bürstenringdichtung und der erfindungsgemäßen Bürstenringdichtungsanordnung anhand der beigefügten schematischen Zeichnungen erläutert. Es zeigen:
Fig. 1 einen Querschnitt einer erfindungsgemäßen Ausführungsform der Bürstenringdichtung und
Fig. 2 einen Querschnitt einer erfindungsgemäßen Ausführungsform der Bürstenringdichtungsanordnung.

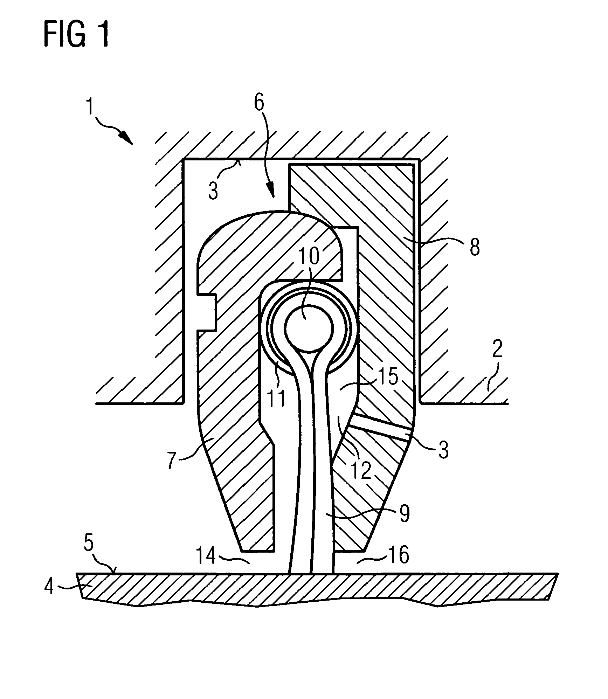

In Fig. 1 ist eine Bürstenringdichtung 1 gezeigt, die in einen Ausgleichskolben 2 eingesetzt ist. In dem Ausgleichskolben 2 ist eine umlaufende Nut 3 vorgesehen, in die die Bürstenringdichtung 1 eingebaut ist. Die Bürstenringdichtung 1 wird verwendet einen Spalt zwischen dem Ausgleichskolben 2 und einem Rotor 4 abzudichten, indem die Bürstenringdichtung 1 diesen Spalt bis zu der Oberfläche 5 des Rotors 4 überbrückt.

Die Bürstenringdichtung 1 weist einen Gehäusering 6 auf, der eine C-Form hat, wobei ein umlaufender Schlitz an der innenliegenden Seite des Gehäuserings 6 angeordnet ist. Der Gehäusering 6 ist gebildet von einem Deckring 7 und einem Stützring 8, wobei in Fig. 1 gesehen der Deckring 7 die linke Flanke des Gehäuserings 6 und der Stützring 8 die rechte Flanke des Gehäuserings 6 bildet.

Zum Abdichten weist die Bürstenringdichtung 1 ein Bürstenringpaket 9 auf, das aus einer Mehrzahl von Drähten aufgebaut ist. Die Drähte sind U-förmig um einen Kerndraht 10 geschlagen, der im Inneren des Gehäuserings 6 angeordnet ist. Die Drähre stehen radial nach innen von dem Gehäusering 6 vor und stoßen mit ihren beiden Längsenden an die Rotoroberfläche 5. Um den Kerndraht 10 und die Drähte des Bürstenringpakets 11 zusammenhaltend ist ein Klemmrohr 11 in dem Gehäusering 6 angebracht, das seinerseits in dem Gehäusering 6 festgeklemmt ist, so dass das Bürstenringpaket 9 in dem Gehäusering 6 radial nach außen und in Axialrichtung des Rotors 4 festgelegt ist.

Der Deckring 7 und der Stützring 8 erstrecken sich radial in Richtung zu dem Rotor 4 bis auf einen Abstand, der zwischen der Rotoroberfläche 5 und den innenliegenden Längsenden des Deckrings 7 und des Stützrings 8 ausgebildet ist. Über diesen Abstand steht das Bürstenringpaket 9 vor und ist beim Betrieb der Bürstenringdichtung 1 an dem Innenrad des Stützrings 8 axial abgestützt.

Beim Betrieb der Bürstenringdichtung 1 liegt in Fig. 1 gesehen links von der Bürstenringdichtung 1 ein Druck I 14 und rechts von der Bürstenringdichtung 1 ein Druck III 16 an, wobei der Druck III kleiner ist als der Druck I. Der Differenzdruck zwischen dem Druck III und dem Druck I wird von der Bürstenringdichtung 1 abgebaut. Dadurch, dass das Bürstenringpaket 9 an dem Innenrand des Stützrings 8 abgestützt und das Bürstenringpaket 9 mit dem Klemmrohr 11 in dem Gehäusering 6 festgeklemmt ist, ist zwischen dem Stützring 8 und dem Bürstenringpaket 9 ein Hohlraum ausgebildet, der eine Druckentlastungskammer 12 bildet. In dem Stützring 8 ist eine Druckausgleichsöffnung 13 vorgesehen, die die Druckentlastungskammer 12 nach außen hin öffnet. Dadurch prägt sich in der Druckentlastungskammer 12 der Druck III in die Druckentlastungskammer 12 auf, so dass sich in der Druckentlastungskammer 12 ein Druck II 15 einstellt, der zwischen dem Druck I und dem Druck III liegt.

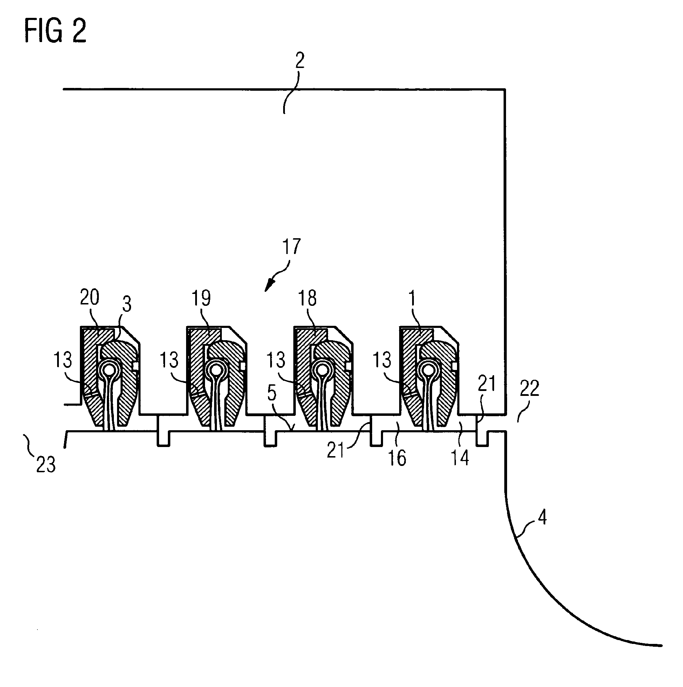

In Fig. 2 ist eine Bürstenringdichtungsanordnung 17 gezeigt, die die Bürstenringdichtung 1, eine zweite Bürstenringdichtung 18, eine dritte Bürstenringdichtung 19 und eine vierte Bürstenringdichtung 20 aufweist, wobei die Bürstenringdichtungen 1, 18 bis 20 axial hintereinanderliegend angeordnet sind. Die Bürstenringdichtungen sind in dem Ausgleichskolben 2 in entsprechend für sie vorgesehene Nuten eingebaut und berühren die Rotoroberfläche 5. Zwischen den Bürstenringdichtungen 1, 18 bis 20 ist jeweils eine Labyrinthspitze 21 vorgesehen.

In Fig. 2 gesehen liegt rechts von der Bürstenringdichtungsanordnung 17 ein Druck IV 22 und links von der Bürstenringdichtungsanordnung 17 ein Druck V 23 an, wobei der Druck V kleiner als der Druck IV ist, so dass die Differenz zwischen dem Druck V und dem Druck IV von der Bürstenringdichtungsanordnung 17 abgebaut wird. Ferner ist der Druck IV etwas höher als der Druck I, der sich vor der Bürstenringdichtung 1 in der Bürstenringdichtungsanordnung 17 einstellt.

Dadurch, dass die Bürstenringdichtungen 1, 18 bis 20 in ihren Stützringen 8 jeweils eine Druckausgleichsöffnung 13 aufweisen, prägt sich der Druck V durch die Druckausgleichsöffnungen 13 und den Druckentlastungskammern 12 der einzelnen Bürstenringdichtungen 1, 18 bis 20 in Richtung zu dem Druck IV auf. Somit wird der Druck IV von der Bürstenringdichtungsanordnung 17 stufenweise und linear, auf den Druck V abgebaut.

## Patentansprüche

1. Bürstenringdichtungsanordnung für eine Turbomaschine, aufweisend eine Mehrzahl an Bürstenringdichtungen (1), mit jeweils einem Stützring (8) und einem Bürstenringpaket (9), das von dem Innenrand des Stützrings (8) nach innen vorsteht sowie an dem Innenrand und an einer radial außerhalb des Innenrands angeordneten Abstützstelle an dem Stützring (8) axial abgestützt ist, so dass zwischen dem Innenrand und der Abstützstelle von dem Bürstenringpaket (9) und dem Stützring (8) begrenzt ein ringförmiger Hohlraum (12) gebildet ist, wobei der Stützring (8) eine Druckausgleichsöffnung (13) aufweist, wodurch, wenn an der in die Turbomaschine eingebaute Bürstenringdichtung (1) an der einen Seite der Bürstenringdichtung (1), der das Bürstenringpaket (9) zugewandt ist, ein erster Druck (14) und an der anderen Seite der Bürstenringdichtung (1), an der die Druckausgleichsöffnung (13) angesiedelt ist, ein dritter Druck (16) anliegt, der kleiner als der erste Druck (14) ist, sich in dem Hohlraum (12) ein zweiter Druck (15) einstellt, der zwischen dem ersten Druck (14) und dem dritten Druck (16) liegt, wobei die Bürstenringdichtungen (1) axial hintereinander liegend angeordnet sind, so dass, wenn an der einen Seite der Bürstenringdichtungsanordnung (17) ein vierter Druck (22) und an der anderen Seite der Bürstenringdichtungsanordnung (17) ein fünfter Druck (23) anliegt, der kleiner als der vierte Druck (22) ist, die Differenz zwischen dem vierten Druck (22) und dem fünften Druck (23) über die Bürstenringdichtungen (1) stufenweise abgebaut wird,
wobei die Druckausgleichsöffnungen (13) der einzelnen Bürstenringdichtungen (1) derart dimensioniert sind, dass die Differenz zwischen dem vierten Druck und dem fünften Druck über die Bürstenringdichtungen linear abgebaut wird, und
wobei die Druckausgleichsöffnungen der einzelnen Bürstenringdichtungen (1) von den über den Umfang verteilten Druckausgleichslöchern (13) gebildet sind, deren Durchmesser von Bürstenringdichtung (20, 19, 18, 1) zu
Bürstenringdichtung (19, 18, 1) derart variiert, dass die Differenz zwischen dem vierten Druck (22) und dem fünften Druck (23) über die Bürstenringdichtungen (1) linear abgebaut wird.

2. Bürstenringdichtungsanordnung gemäß Anspruch 1, wobei das Bürstenringpaket (9) an ihrem radial außen liegenden Rand mit einer umlaufenden Verdickung ausgebildet ist, mit der das Bürstenringpaket (9) an der Abstützstelle anliegt.

3. Bürstenringdichtungsanordnung gemäß Anspruch 2, wobei die Bürstenringdichtungsanordnung (1) einen Deckring (7) aufweist, der zusammen mit dem Stützring (8) ein C-förmiges Gehäuse (6) der Bürstenringdichtung (1) bildet, so dass das Bürstenringpaket (9) an der Verdickung in dem Gehäuse (6) festgeklemmt ist.

4. Bürstenringdichtungsanordnung gemäß Anspruch 3, wobei die Verdickung von einem Klemmrohr (11) gebildet ist, das ein am Innenumfang geschlitztes, umlaufendes Rohr ist, in dem der äußere Abschnitt des Bürstenringpakets (9) untergebracht ist, das durch den Schlitz des Klemmrohrs (11) nach innen vorsteht.

5. Bürstenringdichtungsanordnung gemäß einem der Ansprüche 1 bis 4, wobei die Druckausgleichsöffnung von einer über den Umfang verteilten Mehrzahl an Druckausgleichslöcher (13) gebildet ist.

6. Bürstenringdichtungsanordnung gemäß einem der Ansprüche 1 bis 5, wobei zwischen den einzelnen Bürstenringdichtungen (1) jeweils eine Labyrinthspitze (21) vorgesehen ist.

## Claims

1. A brush ring seal arrangement for a turbo-machine, comprising a plurality of brush ring seals (1), each with a supporting ring (8) and a brush ring packet (9), which protrudes inwards from the inner wall of the supporting ring (8) and is axially supported against the support ring (8) against the inner wall and a supporting point arranged radially outside the inner wall, so that an annular cavity (12) is formed between the inner wall and the supporting point, delimited by the brush ring packet (9) and the supporting ring (8), with the supporting ring (8) comprising a pressure compensation opening (13), through which, if a first pressure (14) obtains at the brush ring seal (1) installed in the turbo-machine on the one side of the brush ring seal (1) which faces towards the brush ring packet (9) and a third pressure (16) obtains at the other side of the brush ring seal (1) on which the pressure compensation opening (13) is accommodated, which is lower than the first pressure (14), a second pressure (15) arises in the cavity (12) which lies between the first pressure (15) and the third pressure (16), with the brush ring seals (1) being arranged axially one behind the other so that, if a fourth pressure (22) obtains on the one side of the brush ring seal arrangement (17) and a fifth pressure (23), which is lower than the fourth pressure (22), obtains on the other side of the brush ring seal arrangement (17) the difference between the fourth pressure (22) and the fifth pressure (23) is gradually reduced across the brush ring seals (1),
with the pressure compensation openings (13) of the individual brush ring seals (1) being dimensioned such that the difference between the fourth pressure and the fifth pressure is reduced linearly across the brush ring seals, and,
with the pressure compensation openings of the individual brush ring seals (1) being formed by the pressure compensation holes (13) distributed across the periphery, the diameter of which varies from brush seal (20, 19, 18, 1) to brush seal (19, 18, 1) such that the difference between the fourth pressure (22) and the fifth pressure (23) is reduced linearly across the brush ring seals (1).

2. Brush ring seal arrangement according to claim 1, with the brush ring packet (9) being embodied on its edge disposed radially outwards with a thickened area around its circumference, with which the brush ring packet (9) rests against the supporting point.

3. Brush ring seal arrangement according to claim 2, with the brush ring seal arrangement (1) comprising a cover ring (7), which, together with the supporting ring (8), forms a C-shaped housing (6) of the brush ring seal (1) so that the brush ring packet (9) is clamped firmly to the thickened area in the housing (6).

4. Brush ring seal arrangement according to claim 3, with the thickened area being formed by a clamping tube (11), which is a peripheral tube slotted on its inner circumference, in which the outer section of the brush ring packet (9), which protrudes inwards through the slot of the clamping tube (11), is accommodated which protrudes inwards through the slot of the clamping tube (11).

5. Brush ring seal arrangement according to one of claims 1 to 4, with the pressure compensation opening being formed by a plurality of pressure compensation holes (13) distributed over the circumference.

6. Brush ring seal arrangement according to one of claims 1 to 5, with a labyrinth tip (21) being provided in each case between the individual brush ring seals (1).

## Revendications

1. Agencement de joints annulaires à brosse pour une turbomachine, qui présente une pluralité de joints annulaires à brosse (1) comprenant chacun une bague d'appui (8) et un paquet de bagues à brosse (9) qui fait saillie vers l'intérieur depuis le bord intérieur de la bague d'appui (8) et est axialement supporté sur la bague d'appui (8) au niveau du bord intérieur et au niveau d'un point d'appui disposé radialement à l'extérieur du bord intérieur, de sorte qu'est formé, entre le bord intérieur et le point d'appui, un espace creux (12) annulaire, délimité par le paquet de bagues à brosse (9) et la bague d'appui (8), la bague d'appui (8) présentant une ouverture d'équilibrage de pression (13) moyennant laquelle, lorsque sur le joint annulaire à brosse (1) monté dans la turbomachine est appliquée sur l'un des côtés du joint annulaire à brosse (1) vers lequel est orienté le paquet de bagues à brosse (9), une première pression (14), et sur l'autre côté du joint annulaire à brosse (1) où est située l'ouverture d'équilibrage de pression (13), une troisième pression (16) inférieure à la première pression (14), on obtient dans l'espace creux (12) une deuxième pression (15) comprise entre la première pression (14) et la troisième pression (16), les joints annulaires à brosse (1) étant disposés axialement l'un derrière l'autre, de telle sorte que lorsque sur l'un des côtés de l'agencement de joints annulaires à brosse (17) est appliquée une quatrième pression (22) et sur l'autre côté de l'agencement de joints annulaires à brosse (17) une cinquième pression (23) inférieure à la quatrième pression (22), la différence entre la quatrième pression (22) et la cinquième pression (23) est résorbée progressivement via les joints annulaires à brosse (1),
les ouvertures d'équilibrage de pression (13) des différents joints annulaires à brosse (1) étant dimensionnées de telle sorte que la différence entre la quatrième pression et la cinquième pression est résorbée linéairement via les joints annulaires à brosse, et
les ouvertures d'équilibrage de pression des différents joints annulaires à brosse (1) étant formées par les trous d'équilibrage de pression (13) répartis sur le pourtour et dont le diamètre varie d'un joint annulaire à brosse (20, 19, 18, 1) à l'autre (19, 18, 1), de telle sorte que la différence entre la quatrième pression (22) et la cinquième pression (23) est résorbée linéairement via les joints annulaires à brosse (1).

2. Agencement de joints annulaires à brosse selon la revendication 1, le paquet de bagues à brosse (9) étant réalisé sur son bord radialement extérieur avec un épaississement périphérique par lequel le paquet de bagues à brosse (9) est en appui sur le point d'appui.

3. Agencement de joints annulaires à brosse selon la revendication 2, l'agencement de joints annulaires à brosse (1) comprenant une bague de recouvrement (7), formant ensemble avec la bague d'appui (8) un carter (6) en forme de C du joint annulaire à brosse (1), de telle sorte que le paquet de bagues à brosse (9) est serré dans le carter (6) au niveau de l'épaississement.

4. Agencement de joints annulaires à brosse selon la revendication 3, l'épaississement étant formé par un tube de serrage (11) qui est un tube périphérique, fendu sur son pourtour intérieur, et dans lequel est logée la portion extérieure du paquet de bagues à brosse (9) faisant saillie vers l'intérieur à travers la fente du tube de serrage (11).

5. Agencement de joints annulaires à brosse selon l'une des revendications 1 à 4, l'ouverture d'équilibrage de pression étant formée par une pluralité de trous d'équilibrage de pression (13) répartis sur le pourtour.

6. Agencement de joints annulaires à brosse selon l'une des revendications 1 à 5, une pointe (21) de joint labyrinthe étant prévue entre chacun des différents joints annulaires à brosse (1).
